(19) Europäisches Patentamt
European Patent Office
Office européen des brevets

(11) Veröffentlichungsnummer: **0 658 600 A2**

# (12) EUROPÄISCHE PATENTANMELDUNG

(21) Anmeldenummer: **94119109.0**

(51) Int. Cl.[6]: **C08L 71/00**, C08L 69/00

(22) Anmeldetag: **03.12.94**

(30) Priorität: **11.12.93 DE 4342317**
**15.01.94 DE 4401058**

(43) Veröffentlichungstag der Anmeldung:
**21.06.95 Patentblatt 95/25**

(84) Benannte Vertragsstaaten:
**BE DE ES FR GB IT NL**

(71) Anmelder: **BASF AKTIENGESELLSCHAFT**
**D-67056 Ludwigshafen (DE)**

(72) Erfinder: **Weber, Martin, Dr.**
**Eckstrasse 19**
**D-67433 Neustadt (DE)**
Erfinder: **Elbl-Weiser, Karin, Dr.**
**Panoramastrasse 39**
**D-69198 Schriesheim (DE)**

(54) **Formmassen auf der Basis von Polyarylenether und Polycarbonaten.**

(57) Formmassen, enthaltend als wesentliche Komponenten

A) 1 bis 50 Gew.-% Polyarylenether, in denen mindestens 0,03 Gew.-% Hydroxyendgruppen, bezogen auf das Molekulargewicht $M_n$ (Zahlenmittelwert) der Polyarylenether, sind,
B) 5 bis 94 Gew.-% Polyarylenether, in denen weniger als 0,03 Gew.-% Hydroxyendgruppen, bezogen auf das Molekulargewicht $M_n$ (Zahlenmittelwert) der Polyarylenether, sind,
C) 5 bis 94 Gew.-% Polycarbonate,
D) 0 bis 50 Gew.-% faser- oder teilchenförmiger Füllstoffe und
E) 0 bis 40 Gew.-% schlagzähmodifizierender Kautschuke,
F) 0 bis 40 Gew.-% weiterer Additive,

wobei sich die Komponenten A bis F zu 100 Gew.-% addieren.

EP 0 658 600 A2

Die vorliegende Erfindung betrifft Formmassen, die als wesentliche Komponenten

A) 1 bis 50 Gew.-% Polyarylenether, in denen mindestens 0,03 Gew.-%, bezogen auf das Molekulargewicht $M_n$ (Zahlenmittelwert) der Polyarylenether, Hydroxyendgruppen sind,

B) 5 bis 94 Gew.-% Polyarylenether, in denen weniger als 0,03 Gew.-%, bezogen auf das Molekulargewicht $M_n$ (Zahlenmittelwert) der Polyarylenether, Hydroxyendgruppen sind,

C) 5 bis 94 Gew.-% Polycarbonate,

D) 0 bis 50 Gew.-% faser- oder teilchenförmiger Füllstoffe und

E) 0 bis 40 Gew.-% schlagzähmodifizierender Kautschuke,

F) 0 bis 40 Gew.-% weiterer Additive,

wobei sich die Komponenten A bis F zu 100 Gew.-% addieren,
enthalten. Darüber hinaus betrifft die vorliegende Erfindung deren Verwendung.

Mischungen aus Polyarylenethern und Polycarbonaten sind an sich bekannt. Die aus diesen Mischungen hergestellten Formkörper weisen im allgemeinen erhöhte Spannungsrißbeständigkeiten auf.

In der DE-A 42 08 341 werden thermoplastische Formmassen aus Mischungen von Copolyarylenethern und Polycarbonaten beschrieben, die sich durch gute Zähigkeitseigenschaften auszeichnen und in der EP-A1-127 852 wird erwähnt, daß Kochgeschirr aus Mischungen von Polyarylenethern und Polycarbonaten hergestellt werden kann.

Da die Carbonatbindungen von Polycarbonaten bei Kontakt mit Wasser teilweise hydrolysiert werden, lassen sich Gegenstände, die aus Polycarbonaten hergestellt sind, für viele Anwendungszwecke nicht einsetzen. Um die Hydrolysebeständigkeit zu verbessern, werden in der EP-A1-217 167 Mischungen aus Polyarylenethern, Polycarbonaten und Polyacrylaten vorgeschlagen.

Neben der Hydrolysebeständigkeit ist die große Wasseraufnahme der bekannten Mischungen problematisch. Werden z.B. Gegenstände aus diesen Mischungen nach dem Kontakt mit Feuchtigkeit schnell aufgeheizt, verdunstet das aufgenommene Wasser und die Oberfläche beginnt Blasen zu werfen ("Blistering").

Aufgabe der vorliegenden Erfindung war es deshalb, Mischungen auf der Basis von Polyarylenethern und Polycarbonaten zur Verfügung zu stellen, die sich durch gute mechanische Eigenschaften und verbessertes Blisterverhalten auszeichnen.

Diese Aufgabe wird durch die eingangs definierten Formmassen gelöst.

Komponente A

Als Komponente A enthalten die erfindungsgemäßen Formmassen 1 bis 50 Gew.-%, bevorzugt 1 bis 35 Gew.-%, insbesondere 3 bis 25 Gew.-% Polyarylenether, in denen mindestens 0,03 Gew.-%, bezogen auf das Molekulargewicht $M_n$ (Zahlenmittelwert) der Polyarylenether, Hydroxyendgruppen sind (Polyarylenether A).

Bevorzugt werden Polyarylenether A mit wiederkehrenden Einheiten I

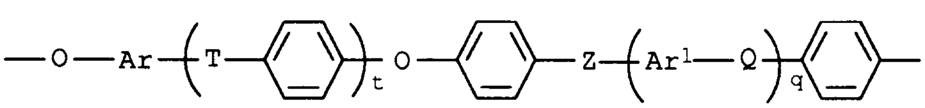 (I)

Komponente A kann aber auch eine Mischung unterschiedlicher Polyarylenether A sein.

Darin können t und q jeweils den Wert 0, 1, 2 oder 3 annehmen. T, Q und Z können unabhängig voneinander gleich oder verschieden sein. Sie können eine chemische Bindung oder eine Gruppe ausgewählt aus -O-, $-SO_2-$, -S-, C=O, -N=N- und S=O sein. Daneben können T, Q und Z auch für eine Gruppe der allgemeinen Formel $-R^aC=CR^b-$ oder $-CR^cR^d-$ stehen, wobei $R^a$ und $R^b$ jeweils Wasserstoff oder $C_1$ bis $C_{10}$-Alkylgruppen, $R^c$ und $R^d$ jeweils Wasserstoff, $C_1$- bis $C_{10}$-Alkyl- wie Methyl, Ethyl, n-Propyl, i-Propyl, t-Butyl, n-Hexyl, $C_1$- bis $C_{10}$-Alkoxy wie Methoxy, Ethoxy, n-Propoxy, i-Propoxy, n-Butoxy oder $C_6$- bis $C_{18}$-Arylgruppen wie Phenyl oder Naphthyl bedeuten. Bevorzugt werden Polyarylenether A, in denen T, Q und Z -O-, $-SO_2-$, C=O, eine chemische Bindung oder eine Gruppe der Formel $-CR^cR^d$ bedeuten. Zu den bevorzugten Resten $R^c$ und $R^d$ zählen Wasserstoff und Methyl. Von den Gruppen T, Q und Z bedeutet mindestens eine $-SO_2-$ oder C=O. Ar und $Ar^1$ stehen für $C_6$- bis $C_{18}$-Arylgruppen, wie 1,5-Naphthyl, 1,6-Naphthyl, 2,7-Naphthyl, 1,5-Anthryl, 9,10-Anthryl, 2,6-Anthryl, 2,7-Anthryl oder Biphenyl, insbesondere Phenyl. Vorzugsweise sind diese Arylgruppen nicht substituiert. Sie können jedoch Substituenten ausgewählt aus $C_1$- bis $C_{10}$-Alkyl- wie Methyl, Ethyl, n-Propyl, i-Propyl, t-Butyl, n-Hexyl, $C_6$- bis $C_{18}$-

Aryl wie Phenyl oder Naphthyl, $C_1$- bis $C_{10}$-Alkoxyreste wie Methoxy, Ethoxy, n-Propoxy, i-Propoxy, n-Butoxy und Halogenatome haben. Zu den davon bevorzugten Substituenten gehören Methyl, Phenyl, Methoxy und Chlor.

Einige geeignete wiederkehrende Einheiten sind im folgenden aufgeführt:

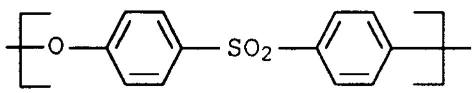

$(I_1)$

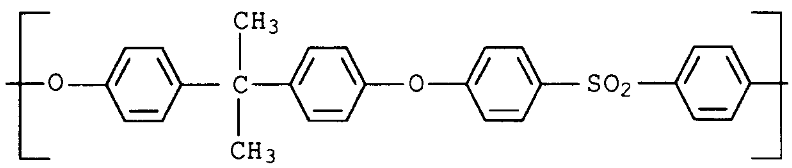

$(I_2)$

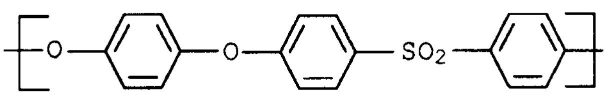

$(I_3)$

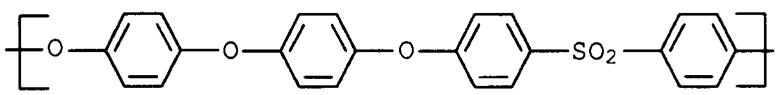

$(I_4)$

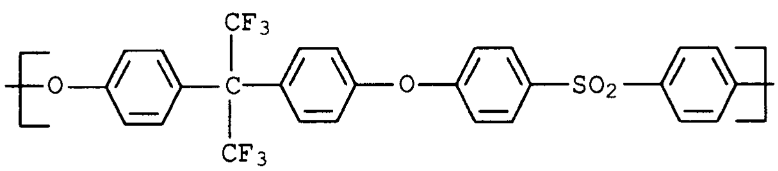

$(I_5)$

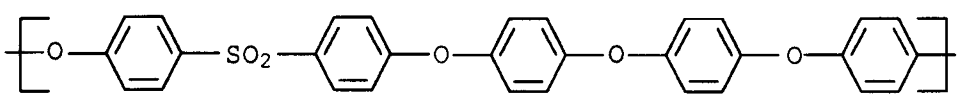

$(I_6)$

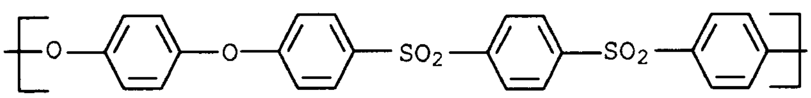

$(I_7)$

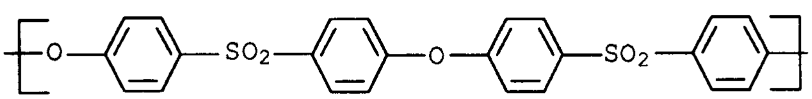

$(I_8)$

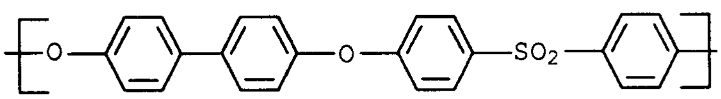

$(I_9)$

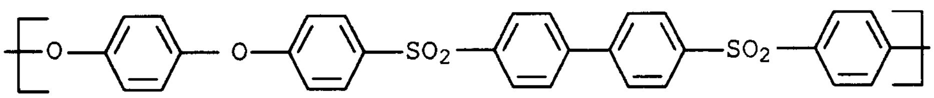

$(I_{10})$

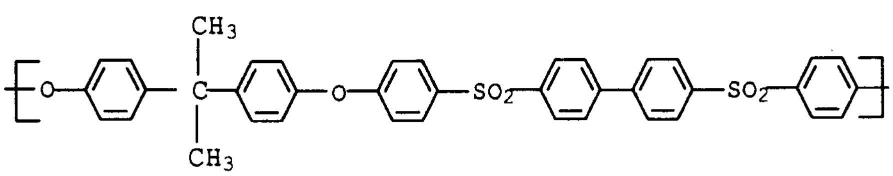

$(I_{11})$

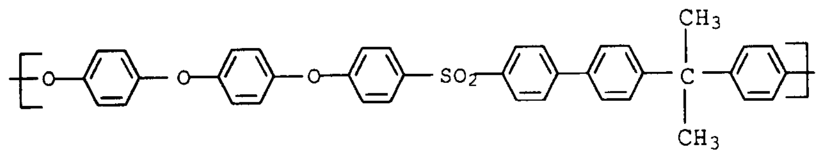

$(I_{12})$

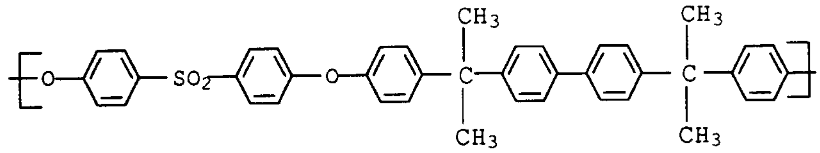

$(I_{13})$

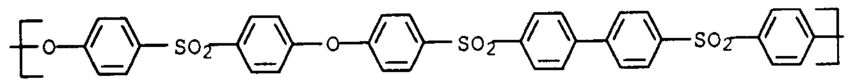

$(I_{14})$

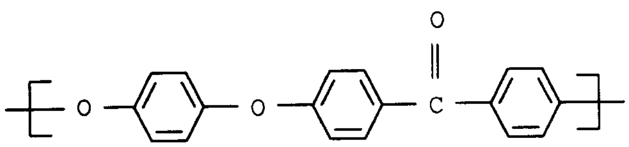

$(I_{15})$

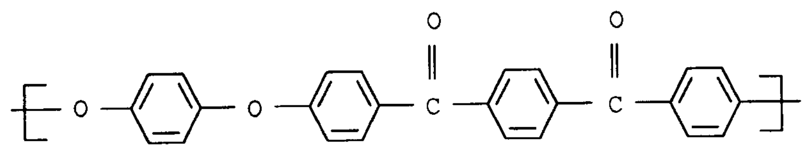

$(I_{16})$

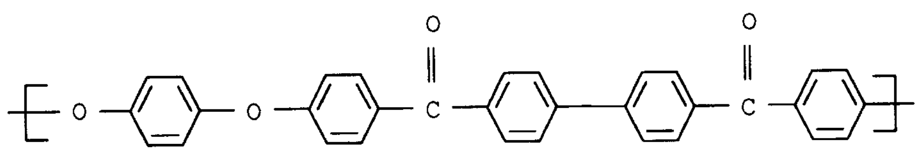

$(I_{17})$

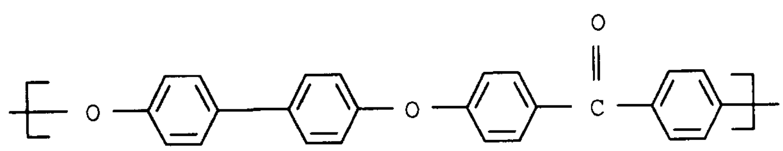

$(I_{18})$

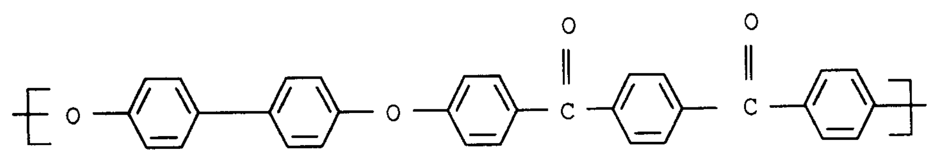

$(I_{19})$

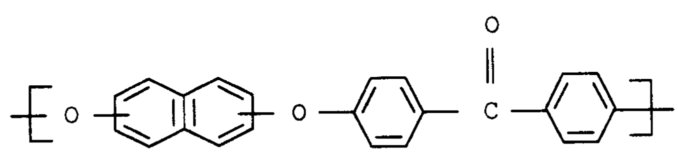

$(I_{20})$

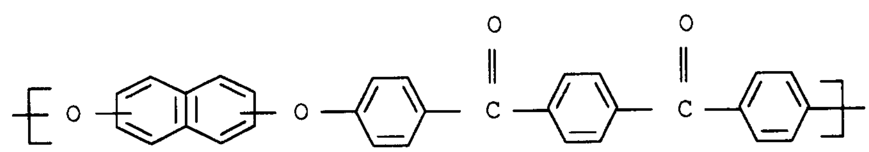

$(I_{21})$

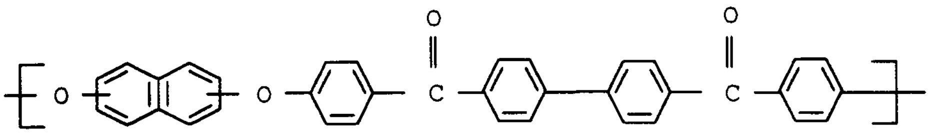

($I_{22}$)

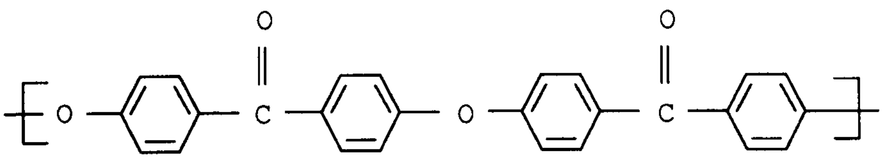

($I_{23}$)

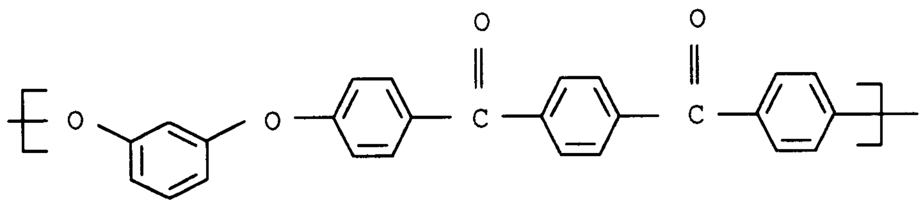

($I_{24}$)

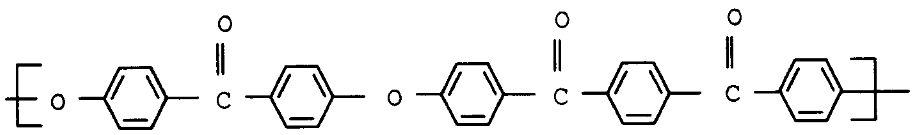

($I_{25}$)

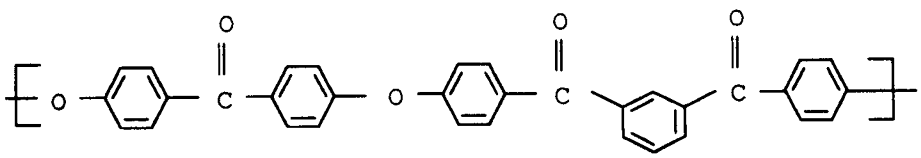

($I_{26}$)

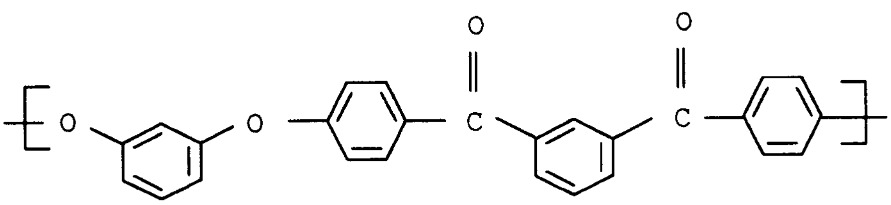

($I_{27}$)

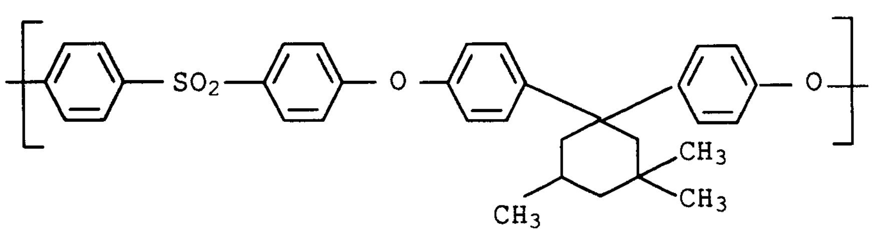

($I_{28}$)

Ganz besonders werden Formmassen bevorzugt, die als Komponente A Polyarylenether mit wiederkehrenden Einheiten ($I_1$), ($I_2$), ($I_{25}$) oder ($I_{26}$) enthalten. Dazu zählen beispielsweise Formmassen, die als Komponente A Polyarylenether mit 0 bis 100 Mol-%, bevorzugt 3 bis 97 Mol-% wiederkehrende Einheiten ($I_1$) und 0 bis 100 Mol-%, bevorzugt 3 bis 97 Mol-% wiederkehrende Einheiten ($I_2$) enthalten.

Die Polyarylenether A können auch Co- oder Blockcopolymere sein, in denen Polyarylenethersegmente und Segmente von anderen thermoplastischen Polymeren wie Polyamiden, Polyestern, aromatischen Polycarbonaten, Polyestercarbonaten, Polysiloxanen, Polyimiden oder Polyetherimiden vorliegen. Die Molekulargewichte (Zahlenmittel) der Blöcke- bzw. der Pfropfarme in den Copolymeren liegen in der Regel im Bereich von 1 000 bis 30 000 g/mol. Die Blöcke unterschiedlicher Struktur können alternierend oder

statistisch angeordnet sein. Der Gewichtsanteil der Polyarylenether in den Co- oder Blockcopolymeren beträgt im allgemeinen mindestens 10 Gew.-%. Der Gewichtsanteil der Polyarylenether kann bis zu 97 Gew.-% betragen. Bevorzugt werden Co- oder Blockcopolymere mit einem Gewichtsanteil an Polyarylenether mit bis zu 90 Gew.-%. Besonders bevorzugt werden Co- oder Blockcopolymere mit 20 bis 80 Gew.-% Polyarylenether.

Polyarylenether mit wiederkehrenden Einheiten I sind an sich bekannt und können nach bekannten Methoden hergestellt werden.

Sie entstehen z.B. durch Kondensation aromatischer Bishalogenverbindungen und den Alkalidoppelsalzen aromatischer Bisphenole. Sie können beispielsweise auch durch Selbstkondensation von Alkalisalzen aromatischer Halogenphenole in Gegenwart eines Katalysators hergestellt werden. Der DE-A-38 43 438 ist beispielsweise eine ausführliche Zusammenstellung geeigneter Monomerer zu entnehmen. Geeignete Verfahren werden unter anderem in der US-A-3 441 538, 4 108 837, der DE-A1-27 38 962 und der EP-A1-361 beschrieben. Polyarylenether, die Carbonylfunktionen enthalten, sind auch durch elektrophile (Friedel-Crafts)-Polykondensation zugänglich, wie unter anderem in der WO 84/03892 beschrieben. Bei der elektrophilen Polykondensation werden zur Bildung der Carbonylbrücken entweder Dicarbonsäurechloride oder Phosgen mit Aromaten, welche zwei - durch elektrophile Substituenten austauschbare - Wasserstoffatome enthalten, umgesetzt, oder es wird ein aromatisches Carbonsäurechlorid, das sowohl eine Säurechloridgruppe als auch ein substituierbares Wasserstoffatom enthält, mit sich selbst polykondensiert.

Bevorzugte Verfahrensbedingungen zur Synthese von Polyarylenethern sind beispielsweise in den EP-A-113 112 und 135 130 beschrieben. Besonders geeignet ist die Umsetzung der Monomeren in aprotischen Lösungsmitteln, insbesondere N-Methylpyrrolidon, in Gegenwart von wasserfreiem Alkalicarbonat, insbesondere Kaliumcarbonat. Die Monomeren in der Schmelze umzusetzen, hat sich in vielen Fällen ebenso als vorteilhaft erwiesen.

Polyarylenether mit wiederkehrenden Einheiten I und Hydroxyendgruppen (Polyarylenether A) können beispielsweise durch geeignete Wahl des molaren Verhältnisses zwischen Dihydroxy- und Dichlormonomeren hergestellt werden (siehe z.B. J.E. McGrath et al: Polym. Eng. Sci. 17, 647 (1977); H.-G. Elias "Makromoleküle" 4. Aufl., S. 490-493, (1981), Hüthig & Wepf-Verlag, Basel).

Bevorzugt werden Polyarylenether mit wiederkehrenden Einheiten I verwendet, die 0,02 bis 2 Gew.-%, bevorzugt 0,05 bis 2 Gew.-%, bezogen auf das Molekulargewicht $M_n$ (Zahlenmittelwert) der Polyarylenether, Hydroxyendgruppen aufweisen. Ganz besonders werden solche bevorzugt, die 0,1 bis 1,5 Gew.-%, insbesondere 0,1 bis 1 Gew.-%, bezogen auf das Molekulargewicht $M_n$ (Zahlenmittelwert) der Polyarylenether, Hydroxyendgruppen haben.

Im allgemeinen weisen die bevorzugten Polyarylenether A Viskositätszahlen von 15 bis 140 ml/g (gemessen in 1 gew.-%iger N-Methylpyrrolidon (NMP)-Lösung bei 25 °C) auf. Die Viskositätszahlen der Polyarylenether A können auch geringfügig darüber oder darunter liegen. Werden aber Polyarylenether A mit sehr viel niedrigeren Viskositätszahlen eingesetzt, verschlechtern sich meist die Wärmeformbeständigkeiten der Formmassen, während sich Polyarylenether A mit sehr viel höheren Viskositätszahlen im allgemeinen negativ auf die Fließfähigkeiten der Formmassen auswirken. Ganz besonders bevorzugte Polyarylenether A haben Viskositätszahlen von 25 ml/g bis 65 ml/g (gemessen in 1 gew.-%iger NMP-Lösung bei 25 °C).

Komponente B

Die erfindungsgemäßen Formmassen enthalten als Komponente B 5 bis 94 Gew.-%, bevorzugt 10 bis 89 Gew.-%, insbesondere 15 bis 87 Gew.-% Polyarylenether, in denen weniger als 0,03 Gew.-%, bevorzugt weniger als 0,025 Gew.-%, bezogen auf das Molekulargewicht $M_n$ (Zahlenmittelwert) der Polyarylenether, Hydroxyendgruppen sind (Polyarylenether B).

Bevorzugte Polyarylenether B enthalten wiederkehrende Einheiten der allgemeinen Formel II

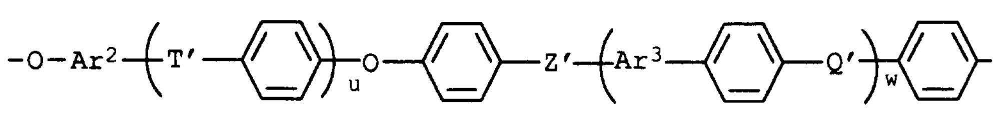 (II)

Dabei haben u und w die gleiche Bedeutung wie t und q und können gleich oder verschieden von diesen sein. T', Q' und Z' haben die gleiche Bedeutung wie T, Q und Z und können gleich oder verschieden von T, Q und Z sein. $Ar^2$ und $Ar^3$ können gleich oder verschieden von Ar und $Ar^1$ sein und haben die gleiche

Bedeutung wie Ar und $Ar^1$.

Als Komponente B können auch Polyarylenethersegmente enthaltende Copolymere eingesetzt werden, wie sie bereits unter A beschrieben wurden. Es ist auch möglich Mischungen unterschiedlicher Polyarylenether B einzusetzen.

Bevorzugte Polyarylenether B enthalten wiederkehrende Einheiten der oben angegebenen Formeln ($I_1$) bis ($I_{27}$). Darunter sind Polyarylenether B besonders bevorzugt, die wiederkehrende Einheiten ($I_1$), ($I_2$), ($I_{25}$) oder ($I_{26}$) enthalten. Dazu zählen Polyarylenether B mit 0 bis 100 Mol-%, bevorzugt 3 bis 97 Mol-% wiederkehrenden Einheiten ($I_1$) und 0 bis 100 Mol-%, bevorzugt 3 bis 97 Mol-% wiederkehrenden Einheiten ($I_2$).

Die Polyarylenether B können beispielsweise Halogen-, Methoxy-, Anhydrid-, Phenoxy-, Benzyloxy- oder Aminoendgruppen enthalten. Bevorzugt werden Polyarylenether B mit Halogen- oder Methoxyendgruppen verwendet.

Im allgemeinen weisen die Polyarylenether B mittlere Molekulargewichte $\overline{M}_n$ (Zahlenmittelwert) im Bereich von 15 000 bis 60 000 g/mol und Viskositätszahlen von 15 bis 140 ml/g auf. Die Viskositätszahlen werden je nach Löslichkeit der Polyarylenether B entweder in 1 gew.-%iger NMP-Lösung, in Mischungen aus Phenol und Dichlorbenzol oder in 96 %iger Schwefelsäure bei jeweils 20 °C bzw. 25 °C bestimmt.

Derartige Polyarylenether sind wie oben beschrieben an sich bekannt oder nach bekannten Methoden erhältlich.

Komponente C

Als Komponente C enthalten die erfindungsgemäßen Formmassen 5 bis 94, bevorzugt 10 bis 75, insbesondere 10 bis 72 Gew.-% Polycarbonate.

Geeignete Polycarbonate C sind an sich bekannt. Sie sind z.B. entsprechend den Verfahren der DE-B-1 300 266 durch Grenzflächenpolykondensationoder gemäß dem Verfahren der DE-A-1 495 730 durch Umsetzung von Diphenylcarbonat mit Bisphenolen erhältlich. Bevorzugtes Bisphenol ist 2,2-Di(4-hydroxyphenyl)propan, im allgemeinen - wie auch im folgenden - als Bisphenol A bezeichnet.

Anstelle von Bisphenol A können auch andere aromatische Dihydroxiverbindungen verwendet werden, insbesondere 2,2-Di(4-hydroxyphenyl)pentan, 2,6-Dihydroxynaphthalin, 4,4'-Dihydroxydiphenylsulfon, 4,4'-Dihydroxydiphenylether, 4,4'-Dihydroxydiphenylsulfit, 4,4'-Dihydroxydiphenylmethan, 1,1-Di-(4-hydroxyphenyl)ethan, 4,4-Dihydroxydiphenyl oder Dihydroxydiphenylcycloalkane, bevorzugt Dihydroxydiphenylcyclohexane oder Dihydroxycyclopentane, insbesondere 1,1-Bis-(4-hydroxyphenyl)-3,3,5-trimethylcyclohexan sowie Mischungen der vorgenannten Dihydroxyverbindungen.

Besonders bevorzugte Polycarbonate sind solche auf der Basis von Bisphenol A oder Bisphenol A zusammen mit bis zu 80 Mol-% der vorstehend genannten aromatischen Dihydroxiverbindungen.

Es können auch Copolycarbonate gemäß der US-A 3 737 409 verwendet werden; von besonderem Interesse sind dabei Copolycarbonate auf der Basis von Bisphenol A und Di-(3,5-dimethyl-dihydroxyphenyl)sulfon, die sich durch eine hohe Wärmeformbeständigkeit auszeichnen. Ferner ist es möglich, Mischungen unterschiedlicher Polycarbonate einzusetzen.

Die relative Viskosität der Polycarbonate liegt im allgemeinen im Bereich von 1,2 bis 1,5, insbesondere von 1,27 bis 1,4 (gemessen bei 25 °C in einer 0,5 gew.-%igen Lösung in Dichlormethan).

Komponente D

Neben den Komponenten A, B und C können die erfindungsgemäßen Formmassen noch Verstärkungsmittel oder Füllstoffe enthalten. Als Komponente D können die erfindungsgemäßen Formmassen z.B. bis 50, vorzugsweise 0 bis 45 Gew.-% faser- oder teilchenförmige Füllstoffe oder Verstärkungsstoffe oder deren Mischungen enthalten.

Bevorzugte faserförmige Füll- oder Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte und einem Haftvermittler ausgerüstet sein. Im allgemeinen haben die verwendeten Kohlenstoff- und Glasfasern einen Durchmesser im Bereich von 6 bis 20 $\mu$m.

Die Einarbeitung der Glas- und/oder Kohlefasern kann sowohl in Form von Kurzfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Kohlenstoff- oder Glasfasern können auch in Form von Geweben oder Matten eingesetzt werden.

Als teilchenförmige Füllstoffe eignen sich amorphe Kieselsäure, Asbest, Magnesiumcarbonat (Kreide), gepulverter Quarz, Glimmer, Talkum, Feldspat, Glaskugeln und insbesondere Calciumsilikate wie Wollastonit und Kaolin (insbesondere kalzinierter Kaolin).

Bevorzugte Kombinationen von Füllstoffen sind z.B. 20 Gew.-% Glasfasern mit 15 Gew.-% Wollastonit und 15 Gew.-% Glasfasern mit 15 Gew.-% Wollastonit und 20 Gew.-% Kohlenstoff-Fasern und 25 Gew.-% Wollastonit.

Komponente E

Neben den Komponenten A bis D können die erfindungsgemäßen Formmassen auch bis 40, vorzugsweise 0 bis 30 Gew.-% eines schlagzähmodifizierenden Kautschuks E enthalten. Es können übliche Schlagzähmodifier verwendet werden, die für Polyarylenether und/oder Polycarbonate geeignet sind.

Als geeignete schlagzähmodifizierende Kautschuke sind vor allem Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glasübergangstemperatur von mindestens 25 °C, unter einem weichen Bestandteil ein Polymerisat mit einer Glasübergangstemperatur von höchstens 0 °C. Diese Produkte weisen eine Struktur aus einem Kern und mindestens einer Schale auf, wobei sich die Struktur durch die Reihenfolge der Monomerenzugabe ergibt. Die weichen Bestandteile leiten sich i.a. von Butadien, Isopren, Alkylacrylaten oder Alkylmethacrylaten, Siloxanen und gegebenenfalls weiteren Comonomeren ab. Geeignete Siloxankerne können beispielsweise ausgehend von cyclischen oligomeren Octamethyltetrasiloxan oder Tetravinyltetramethyltetrasiloxan hergestellt werden. Diese können beispielsweise mit γ-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono- oder Diester oder Maleinsäure, tertiär-Butyl(meth-)acrylat, Acrylsäure, Glycidyl(meth-)acrylat und Vinyloxazolin. Der Anteil an Monomeren mit funktionellen Gruppen beträgt i.a. 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt i.a. 1:9 bis 9:1, bevorzugt 3:7 bis 8:2.

Daneben können auch Kautschuke auf der Basis von Ethylen und Propylen, sogenannte EPDM-Kautschuke, die mit geeigneten Monomeren gepfropft sind, als Schlagzähmodifier für die erfindungsgemäßen Formmassen verwendet werden. Als Monomere zur Pfropfung der EPDM-Kautschuke sind z.B. Styrol, α-Methylstyrol, Acrylnitril, Methacrylnitril oder Methylmethacrylat geeignet.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkettige Segmente, die sich von niedermolekularen Diolen und Dicarbonsäuren ableiten, enthalten. Derartige Produkte sind an sich bekannt und in der Literatur, z.B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

Neben den beschriebenen Bestandteilen A bis E können die erfindungsgemäßen Formmassen noch z.B. bis 40 Gew.-% weiterer Additive wie Flammschutzmittel und Stabilisatoren enthalten.

Die erfindungsgemäßen Formmassen können nach an sich bekannten Verfahren, beispielsweise Extrusion, hergestellt werden.

Die Formmassen können z.B. hergestellt werden, indem man die Ausgangskomponenten in üblichen Mischvorrichtungen wie Schneckenextrudern, vorzugsweise Zweischneckenextrudern, Brabender-Mühlen

oder Banburry-Mühlen sowie Knetern mischt und anschließend extrudiert. Üblicherweise wird das Extrudat nach der Extrusion abgekühlt und zerkleinert.

Die Reihenfolge der Mischung der Komponenten kann variiert werden, so können zwei oder ggf. drei Komponenten vorgemischt werden, es können aber auch alle Komponenten gemeinsam gemischt werden.

Um eine möglichst homogene Formmasse zu erhalten, ist eine intensive Durchmischung vorteilhaft. Dazu sind im allgemeinen mittlere Mischzeiten von 0,2 bis 30 Minuten bei Temperaturen von 280 bis 390 °C erforderlich.

Die erfindungsgemäßen Formmassen sind thermoplastisch und zeichnen sich durch ein ausgewogenes Eigenschaftsprofil aus. Insbesondere weisen die erfindungsgemäßen Formmassen ein deutlich verbessertes Blisterverhalten auf.

Die erfindungsgemäßen Formmassen können zur Herstellung von Formkörpern, Filmen, Folien oder Beschichtungen verwendet werden. Sie eignen sich vor allem zur Herstellung temperaturbeständiger Formkörper auf dem Lebensmittelsektor. Beispiele hierfür sind Transportbehälter, Menüschalen, Kochgeschirr für z.B. Heißluftofen, Backformen, insbesondere Mikrowellengeschirr.

Beispiele

Polyarylenether mit Hydroxyendgruppen ($A_1$)

Das Gemisch der Monomeren [4,4'-Dihydroxydiphenylsulfon (0,5 mol, 143,5 g), 4,4'-Dichlordiphenylsulfon (0,4885 mol, 122,2 g)] wurde mit 0,51 mol (70,5 g) Kaliumcarbonat und 890 ml 1-Methyl-2-pyrrolidon versetzt und unter Stickstoff 8 Stunden auf 185 bis 195 °C erhitzt. Anschließend wurde die Lösung in Wasser gegossen, filtriert, der Rückstand mehrmals mit Wasser gewaschen und bei 120 °C im Vakuum getrocknet. Die Viskositätszahl des Produkts betrug 46,2 ml/g, der Anteil an OH-Endgruppen wurde durch potentiometrische Titration einer Dimethylformamidlösung des Produkts mit methanolischer KOH zu 0,16 Gew.-% bestimmt.

Polyarylenether ($B_1$)

Polyarylenether aus 4,4'-Dihydroxydiphenylsulfon und 4,4'-Dichlordiphenylsulfon (VZ = 56 ml/g, gemessen in 1 gew.-%iger Lösung eines Gemisches von Phenol und 1,2-Dichlorbenzol im Gewichtsverhältnis 1:1; z.B. Handelsprodukt Ultrason E 2010, BASF). Der Anteil an OH-Endgruppen betrug weniger als 0,03 Gew.-% (gemessen wie bei $A_1$).

Polycarbonat ($C_1$)

Polycarbonat, erhalten durch Kondensation von Phosgen und Bisphenol A (2,2-Bis(4-hydroxyphenyl)-propan), charakterisiert durch eine Viskositätszahl von 61,2 ml/g, gemessen in 0,5 gew.-%iger Dichlormethan-Lösung bei 23 °C.

Herstellung der Formmassen und anwendungstechnische Prüfungen

Die Komponenten $A_1$, $B_1$ und $C_1$ wurden in einem Zweiwellenextruder (ZSK 30, Fa. Werner & Pfleiderer) bei einer Massetemperatur von 320 bis 350 °C gemischt. Die Schmelze wurde durch ein Wasserbad geleitet und granuliert.

Das getrocknete Granulat wurde bei 330 bis 350 °C zu Rundscheiben (Durchmesser 6,1 mm, Dicke 2 mm), Normkleinstäben und Testkästchen (107x47 mm (Bodenmaße), Wandstärke 1,5 mm) verarbeitet. Die Schädigungsarbeit $W_s$ wurde nach DIN 53 443 bei 23 °C bestimmt. Die Wärmeformbeständigkeit der Proben wurde mittels der Vicat-Erweichungstemperatur ermittelt. Die Vicat-Erweichungstemperatur wurde nach DIN 53 460, mit einer Kraft von 49,05 N und einer Temperatursteigerung von 50 K je Stunde, an Normkleinstäben ermittelt.

Die Fließfähigkeit der Formmassen wurde nach DIN 53 735 bei einer Temperatur von 320 °C und einer Belastung von 21,6 kg bestimmt.

Die Wasseraufnahme der Formmassen wurde an Testkästchen nach 14-tägiger Wasserlagerung bei 25 °C bestimmt.

Die Temperatur, bei der Blasenbildung durch austretende Feuchtigkeit auftritt ($T_B$), wurde durch folgenden Test ermittelt:

Die Testkästchen wurden nach 14-tägiger Wasserlagerung 30 Minuten in einem vorgewärmten Umluftofen

gelagert und anschließend visuell begutachtet. Ermittelt wurde die Temperatur, bei der erstmals Blasen auftraten.

Die Zusammensetzungen der Formmassen und die Ergebnisse der anwendungstechnischen Prüfungen sind Tabelle 1 zu entnehmen.

Tabelle 1

| Beispiel Nr. | $V_1$ | 1 | $V_2$ | 2 | 3 |
|---|---|---|---|---|---|
| Komponente [Gew.-%] | | | | | |
| $A_1$ | 0 | 5 | 0 | 5 | 10 |
| $B_1$ | 80 | 75 | 75 | 70 | 65 |
| $C_1$ | 20 | 20 | 25 | 25 | 25 |
| Eigenschaften | | | | | |
| $W_s$ [Nm] | 85 | 96 | 99 | 103 | 107 |
| Vicat B [°C] | 215 | 215 | 211 | 211 | 210 |
| MVI [ml/10'] | 69 | 70 | 79 | 78 | 80 |
| Wasseraufnahme [Gew.-%] | 1,63 | 1,65 | 1,59 | 1,58 | 1,59 |
| $T_B$ | 150 | 165 | 150 | 165 | 170 |
| V: Vergleichsversuch | | | | | |

Die erfindungsgemäßen Formmassen weisen bei unveränderter Fließfähigkeit und Wärmeformbeständigkeit verbesserte Zähigkeit und deutlich verbessertes Blisterverhalten auf.

**Patentansprüche**

**1.** Formmassen, enthaltend als wesentliche Komponenten

A) 1 bis 50 Gew.-% Polyarylenether, in denen mindestens 0,03 Gew.-%, bezogen auf das Molekulargewicht $M_n$ (Zahlenmittelwert) der Polyarylenether, Hydroxyendgruppen sind,

B) 5 bis 94 Gew.-% Polyarylenether, in denen weniger als 0,03 Gew.-%, bezogen auf das Molekulargewicht $M_n$ (Zahlenmittelwert) der Polyarylenether, Hydroxyendgruppen sind,

C) 5 bis 94 Gew.-% Polycarbonate,

D) 0 bis 50 Gew.-% faser- oder teilchenförmiger Füllstoffe und

E) 0 bis 40 Gew.-% schlagzähmodifizierender Kautschuke,

F) 0 bis 40 Gew.-% weiterer Additive,

wobei sich die Komponenten A bis F zu 100 Gew.-% addieren.

**2.** Formmassen nach Anspruch 1, enthaltend Polyarylenether A mit wiederkehrenden Einheiten I

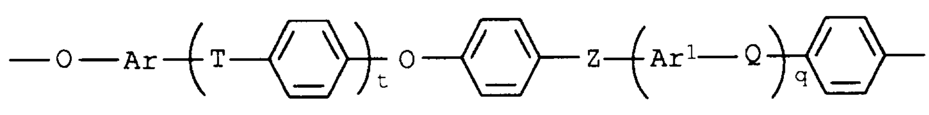

(I)

in denen t und q jeweils eine ganze Zahl 0, 1, 2 oder 3 bedeuten können,

T, Q und Z jeweils eine chemische Bindung oder eine Gruppe ausgewählt aus -O-, -S-, $-SO_2-$, S=O, C=O, -N=N-, $-R^aC=CR^b-$ und $-CR^cR^d-$ sein können, mit der Maßgabe, daß mindestens eine der Gruppen T, Q oder Z $-SO_2-$ oder C=O bedeutet,

$R^a$ und $R^b$ jeweils ein Wasserstoffatom oder eine $C_1$- bis $C_{10}$-Alkylgruppe bedeuten,

$R^c$ und $R^d$ jeweils ein Wasserstoffatom, eine $C_1$- bis $C_{10}$-Alkyl-, $C_1$- bis $C_{10}$-Alkoxy- oder $C_6$- bis $C_{18}$-Arylgruppe, wobei die vorgenannten Gruppen jeweils mit Fluor- und/oder Chloratomen substituiert sein können, bedeuten,

Ar und $Ar^1$ für $C_6$- bis $C_{18}$-Arylgruppen stehen, wobei diese Substituenten haben können, ausgewählt aus $C_1$- bis $C_{10}$-Alkyl, $C_6$- bis $C_{18}$-Aryl, $C_1$- bis $C_{10}$-Alkoxy und Halogen, oder deren statistischen Copolymerisate oder Blockcopolymerisate.

**3.** Formmassen nach Anspruch 1 oder 2, enthaltend Polyarylenether A mit 0 bis 100 Mol-% wiederkehrenden Einheiten $I_1$,

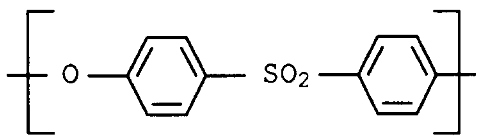

$(I_1)$

und
0 bis 100 Mol-% wiederkehrenden Einheiten $I_2$

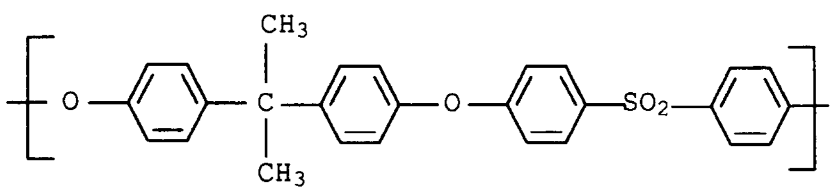

$(I_2)$ .

**4.** Formmassen nach einem der Ansprüche 1 bis 3, enthaltend Polyarylenether A, in denen 0,03 bis 2 Gew.-% aller Endgruppen Hydroxyendgruppen sind.

**5.** Formmassen nach einem der Ansprüche 1 bis 4, enthaltend Polyarylenether B mit wiederkehrenden Einheiten II

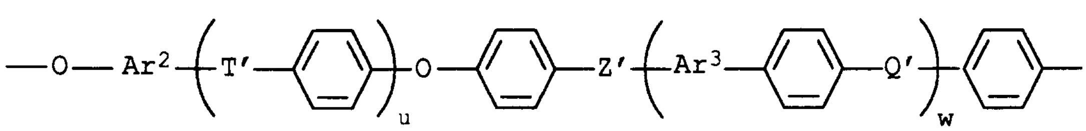

(II)

in denen u und w die gleiche Bedeutung wie t und q haben, T', Q' und Z' die gleiche Bedeutung wie T, Q und Z haben und $Ar^2$ und $Ar^3$ die gleiche Bedeutung wie Ar und $Ar^1$ haben.

**6.** Formmassen nach einem der Ansprüche 1 bis 5, enthaltend Polyarylenether B mit 0 bis 100 Mol-% wiederkehrenden Einheiten $I_1$ und 0 bis 100 Mol-% wiederkehrenden Einheiten $I_2$.

**7.** Verwendung der Formmassen gemäß einem der Ansprüche 1 bis 6 zur Herstellung von Formkörpern, Folien, Filmen oder Beschichtungen.

**8.** Formkörper, Filme, Folien oder Beschichtungen, hergestellt unter Verwendung der Formmassen gemäß einem der Ansprüche 1 bis 6

**9.** Formkörper nach Anspruch 8 als Lebensmittelbehälter.

**10.** Formkörper nach Anspruch 8 oder 9 als Mikrowellengeschirr.